# EUROPEAN PATENT APPLICATION

(11) **EP 2 942 330 A1**
(43) Date of publication of application: **11.11.2015**
(21) Application number: 14167410.1
(22) Date of filing: 07.05.2014
(51) Int. Cl.: C03B 33/027, C03B 33/033

(54) **Cutting table for cutting and separating glass panels**

(71) Applicant: Mecánicas Teruel S.L., 44415 Rubielos de Mora Teruel (ES)
(72) Inventor: Martín, Miguel Tomás, 44415 Rubielos De Mora Teruel (ES)
(74) Representative: Nederlandsch Octrooibureau

(57) **Abstract**

A device for cutting and separating glass panels comprising supporting means for supporting a glass panel in a substantially horizontal orientation. The glass panel comprises an upper and a lower surface. The device comprises a positioning bridge having a horizontally extending positioning portion arranged at a vertical distance from the lower or upper surface of the glass panel and the supporting means, while cutting means, arranged on the positioning portion, comprising a cutting member that is moveable along the positioning portion, and over the lower or upper surface of the glass panel, for cutting the respective surface in such a way as to obtain a linear scribing line. Moreover, the positioning portion is provided with separating means for separating the glass panel into two separate glass panels along the linear scribing line. The separating means are being configured for moving along the positioning portion and along the linear scribing line while exerting a controlled pressure, which varies in a pulsating manner, on the glass panel along the linear scribing line.

## Description

### Field of the invention

The present invention relates to a device for cutting and separating glass panels comprising:
supporting means for supporting a glass panel in a substantially horizontal orientation, the glass panel having an upper and a lower surface,
a positioning bridge having a horizontally extending positioning portion arranged at a vertical distance from the lower or upper surface of the glass panel and the supporting means,
cutting means, arranged on the positioning portion, comprising a first cutting member that is moveable along the positioning portion, and over the lower or upper surface of the glass panel, for cutting the respective surface in such a way as to obtain a linear scribing line. Moreover, the present application relates to a method for cutting and separating glass panels.

### Background of the invention

It is known to effect the cut of glass panels and laminated glass panels on so-called "cutting tables" in a horizontal position where the operation is performed in at least two phases of cutting and separation.

The operation of cutting is performed by using cutting tables comprising a cutting bridge, which supports carriages provided with the scoring tool for tracing the cutting line and with a presser for running the cut of the glass panel.

Moreover, presser bars or presser wheels are typically provided to perform breakout and separation, being arranged laterally to the cutting line, in practice clamping the glass panel along the entire or partial length of a cutting area, so as to perform a traction that parts and separates the glass panel.

With this type of solutions, the presser bars or presser wheels that press and rest on the glass panel may damage one of the surfaces of the glass panel. Furthermore, a major drawback is that considerable work space is required, both in height and in the feed direction of the panels. The above-mentioned solutions cannot be carried out without the need of a big working area, which implies a significant increase of both production and maintenance costs.

Additionally, known solutions also involve a considerable amount of downtime, while failing to provide a high degree of precision, particularly in terms of consistent quality of the finished product. That is to say, some of the above-mentioned solutions involve transferring and repositioning the semifinished parts at another station inevitably resulting in various errors. These are particularly noticeable at the separating stage, the success of which depends on the used tools and the precision of said tools.

It is an object of the present invention to provide a device for cutting and separating glass panels, which can overcome at least one of the above-mentioned drawbacks.

### Summary of the invention

To this end, the device according to the present invention is characterized in that the positioning portion is provided with separating means for separating the glass panel into two separate glass panels along the linear scribing line, the separating means being configured for moving along the positioning portion and along the linear scribing line while exerting a controlled pressure on the glass panel along the linear scribing line, wherein the exerted pressure varies in a pulsating manner.

In this manner, the total time employed for cutting and separating the glass sheet is substantially minimized, while the precision and framing of the final panels is optimized. Moreover, the quality of the cut, especially when the dimensions of the glass panel are reduced, is highly improved.

In an embodiment of the invention, the separating means comprises an electric punching device, a pneumatic punching device or an electric-pneumatic punching device. Advantageously, by using one of the above-mentioned punching devices, a precise separation of the glass panels can be obtained due to these punching devices being provided with a relatively large amount of adjustment options as to precisely adjust them to the required specifics of the operation.

Moreover, the separating means may comprise a contact surface for exerting the pressure on the glass panel, the contact surface being provided with a thermoplastic material or a rubber-like material By using these types of materials at the contact surface of the separating means, when the separating means exert pressure on the glass panel surface, no damage is done due to the elasticity of the above-mentioned materials. Additionally, the shock absorbing properties of these materials provide excellent stability of the punching devices when in use.

In an embodiment of the invention, the contacting surface has a curved or flat surface. This provides the possibility of adapting the contacting surface to the type of surface or hardness of the glass panels.

Additionally, the device according to the present invention may comprise positioning means with clamping members for clamping an edge of the glass panel and for moving the glass panel in a horizontal direction to or from the position portion as to position the glass panel relative to the cutting member and/or the separating means. This provides the possibility of positioning the glass panel on the supporting means in an automated manner. This also provides the possibility of moving the glass panel while performing the operations of cutting and separating in order to obtain contour cuts. Additionally, the glass panel can be moved on the supporting means in an automated manner, which implies higher precision of movement when compared to hand operation movement, which requires substantial skill. Besides, the time needed to perform each of the operations is substantially reduced.

In an embodiment, the separation means comprise a pressure exertion arrangement, comprising a cylinder and a piston moveably arranged therein, extending in a direction perpendicular to the surface of the glass panel upon which the pressure is to be exerted, the pressure exertion arrangement being configured for letting the piston reciprocate at a frequency of 100 - 1000 Hz, more preferably 200 - 800 Hz, most preferably 600 Hz. The pulsations and vibrations thus generated create a smooth, continuous separating action when the separating means are moved along the linear scribing line.

In an embodiment of the present invention, the separation means are configured for moving along the positioning portion and the linear scribing line at a speed of 50 - 1000 mm/s, more preferably 100 - 600 mm/s, most preferably 200 - 400 mm/s. Especially when combined with the above-mentioned reciprocation frequencies of the piston, again a continuous separating action is facilitated when the separating means are moved along the linear scribing line.

Moreover, the glass panel can be a laminate glass panel.

In an embodiment, the exerted pressure is 0,05 - 1,5 MPa, more preferably 0,1 - 1,2 MPa, most preferably 0,3 - 1,0 MPa. By providing such pressures, the glass panel will not get damaged. Moreover, a clean separation along the linear scribing line is achieved, without leaving small traces or fine chips of glass at the cut edges of the separated glass panel.

In an embodiment of the present invention, the positioning bridge comprises two horizontally extending positioning portions, an upper positioning portion during use to be arranged above the upper surface of the glass panel and a lower positioning portion during use to be arranged below the lower surface of the glass panel, wherein cutting means and/or separating means are arranged on both the upper and lower position portions to allow cutting and/or separation operations to be carried out on both the lower and upper surface of the glass panel. By providing the cutting means and/or separating means on both sides of the glass panel, cutting and separation of a laminate glass panel can be performed in an even more simple and time-efficient manner.

Moreover, the device further comprises a suction system positioned at the lower side of the positioning bridge such that in use, after the glass panel has been cut and separated, the suction system engages the glass panel for moving the resulting glass panels apart from each other.

In an embodiment of the invention, the positioning bridge comprises a suction system during use to be positioned below the lower surface of the glass panel, such that after the glass panel has been cut and separated into separated glass panels, the suction system is configured to engage one of the separated glass panels for moving the one separated glass panel apart from the other separated glass panel. Advantageously, this enables the device to apply intense force in order to perform separating of the glass panels in very short times. Also, this provides increased reliability and safety when in use.

Another aspect of the present invention relates to a method for cutting and separating glass panels, comprising the steps of:
a) positioning a glass panel on supporting means, for supporting a glass panel in a substantially horizontal orientation, wherein the glass panel has an upper and a lower surface,
b) cutting or scribing the glass panel along a linear scribing line by means of cutting means, arranged on a horizontally extending positioning portion of a positioning bridge, comprising a cutting member that is movable along the positioning portion, the positioning portion being spaced-apart at a vertical distance from the lower or upper surface of the glass panel and the supporting means, wherein the cutting or scribing is carried out by moving the cutting means along the positioning portion,
c) separating the glass panel into two separated glass panels along the linear scribing line by means of moving separating means, configured to move along the positioning portion and along the linear scribing line, along the positioning portion while exerting a controlled pressure on the glass panel along the linear scribing line, wherein the exerted pressure varies in a pulsating manner.

This method provides a simple and time-efficient manner of cutting and separating glass panels, without the need for a person to perform any manual operations, besides providing the glass panel on the supporting means in a substantially horizontal orientation.

Moreover, step a) may comprise the step of positioning the glass panel on the supporting means by positioning means with clamping members for clamping an edge of the glass panel and moving the glass panel in a horizontal direction to or from the positioning portion as to position the glass panel relative to the cutting member and the separation means.

Additionally, the positioning bridge may comprise a suction system during use to be positioned below the lower surface of the glass panel, wherein after step c) the suction system engages one of the separated glass panels for allowing the other separated glass panel to be moved apart from the one separated glass panel.

When the glass panel is a laminated glass panel comprising a plastic laminate, step c) may further comprise:
e) heating up the plastic laminate of the glass panel by means of heating means arranged at the positioning bridge, and
f) cutting the plastic laminate of the glass panel by means of a cutting blade arranged on the positioning portion.

By using this method the generation of waste is decreased.

Further characteristics and advantages of the invention will become better apparent from the description of a preferred but not exclusive embodiment of a device for cutting and separating glass panels, illustrated by way of non-limiting example in the accompanying drawings, wherein:
Figure 1 is a perspective view of the device according to the invention;
Figure 2 is a detail view of the cutting means and the separating means;
Figure 3 is a side view of the cutting and separating means according to the present invention;
Figure 4 shows a perspective view of the separating means according to an embodiment of the present invention; and
Figure 5 is a side view of the cutting and separating means according to the present invention.

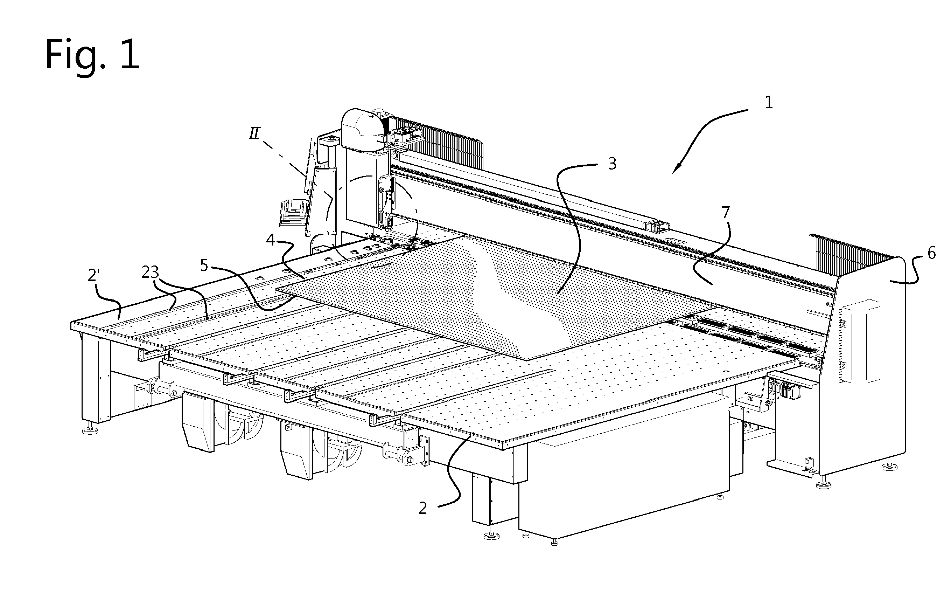

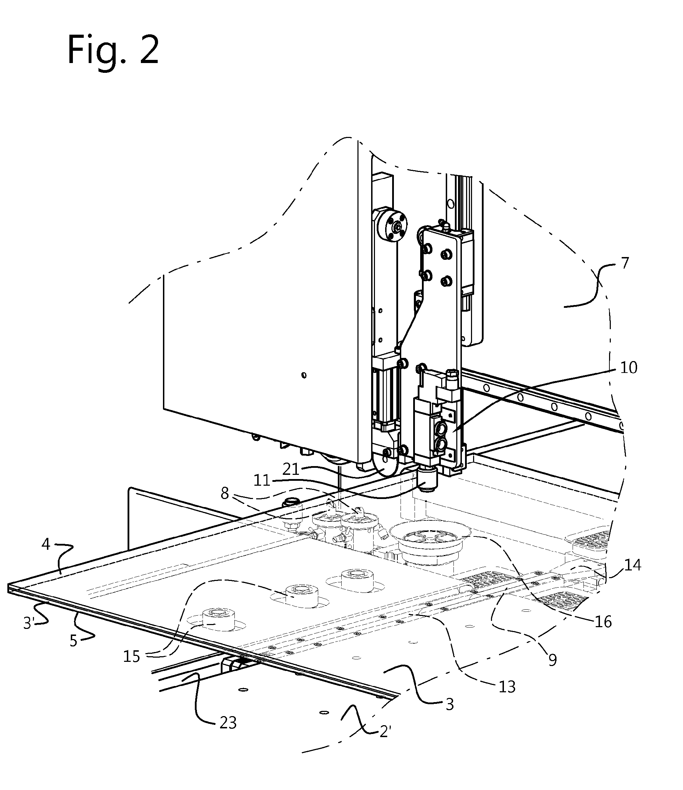

Figure 1 shows a glass panel 3 that is to be processed by a device according to the present invention. The device 1, hereafter referred to as cutting table 1, is specifically designed for cutting single and laminated glass panels. The cutting table 1 comprises a supporting means 2 having a supporting surface 2' for supporting the glass panel 3 in a horizontal orientation as to be cut. The cutting table 1 may comprise a translation mechanism (not illustrated) for positioning the glass panel 3 in an automatic form. Otherwise, the glass panel 3 can be manually positioned on the supporting surface 2' of the supporting means. Moreover, the glass panel 3 comprises an upper and lower surface 4, 5, the lower surface 5 of the glass panel 3 being in contact with the supporting surface 2'. The cutting table 1 furthermore comprises positioning means arranged to be moveable in X-direction with respect to the cutting table 1. The positioning means 13 may have the form of clamping members 14 (as best seen in figure 2), being installed along longitudinal openings 23 arranged in the supporting surface 2' of the cutting table 1. This allows the clamping members to move the glass panel 3 along the X-direction of the supporting surface 2' when the clamping members clamp the glass panels 3 on at least one of the edges 3' of the glass panel.

Moreover, the cutting table 1 comprises a positioning bridge 6 having a horizontally extending positioning portion 7 (i.e. extending in a direction perpendicular to the plane defined by the X- and Y-axes) arranged at a vertical distance from the supporting surface 2', and also from the upper surface 4 of the glass panel 3, when the glass panel 3 is in cutting position. The positioning portion 7 comprises a cutting and separation means 8, 10 moveable along the positioning portion 7. The separation device as illustrated in a form of a punching device 11.

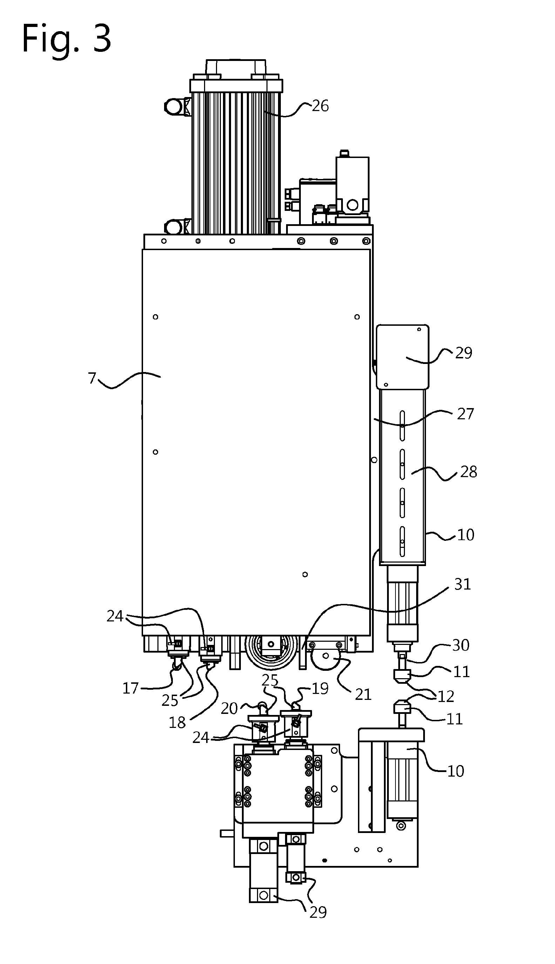

As can be seen more clearly in figure 2, the cutting and separation means 8, 10 are arranged on the positioning portion 7. The cutting means 8 comprise a number of cutting members 17, 18, 19, 20 (see figure 3). Moreover, the cutting table 1 comprises a suction means 15 having a number of suction cups 16 positioned in line with the cutting members 17, 18, 19, 20, and also at a parallel distance from the longitudinal openings 23 along the horizontal orientation of the cutting table 1. The suction cups 16 are arranged at a distance from the longitudinal openings 23, and are configured to be moved in a vertical direction as to engage the lower surface 5 of the glass panel 3. These suction cups 16 can be independently activated and can be positioned in line with the cutting members 17, 18, 19, 20. Additionally, it can be seen that a pair of separating means 10 are arranged on the positioning portion 7. The cutting means 8 are positioned at a vertical distance from the lower and upper surface 4, 5 of the glass panel 3 as to be able to perform a cut on the upper and lower surfaces 4, 5 of the glass panel 3.

Figure 3 shows a side view of the positioning portion 7 of the positioning bridge 6 wherein the embodied arrangement of the cutting members 17, 18, 19, 20 can be seen. The cutting members 17, 18, 19, 20 are in a form of cutting heads, which lie above and under the supporting surface 2', when the glass panel 3 to be cut is supported thereon, and which is provided with a driving motor 26 for transversal displacement of the cutting heads 24, in a direction which is substantially perpendicular to the displacement direction of the horizontal orientation of the glass panel 3. Moreover, the cutting heads 24 comprise a pair of cutting wheels 25 having two different dimensions as to provide the possibility to perform a cut on glass panels 3 of different thicknesses. The differences in diameter of the cutting wheels 25 are provided to adapt the cut of be performed to different glass panels comprising different characteristics. It should be noted that the cutting wheels 25 are rotatable in a free or driven manner about an axis perpendicular to the cutting direction and parallel to a main plane of the glass panel 3.

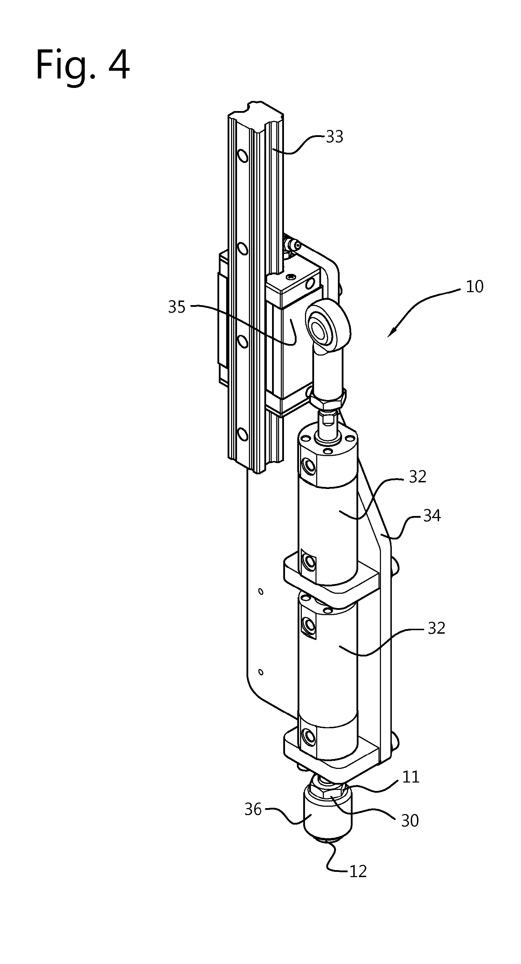

Separation means 10 are furthermore provided on the positioning portion 7 of the positioning bridge 6, shown at a vertical distance from each other. Each of the separation means 10 comprise a separation member 30 comprising a contact member 36(see figure 4), which comprises a material suitable for exerting a controlled pressure on the glass panel surfaces 4, 5 without damaging the surface of the glass panel 3. Said controlled pressure is provided by a motor 29 that actuates a piston 32 (as best seen in figure 4). The piston 32 actuates the separation means 10 in such a way that the separation means 10 are configured for moving along the positioning portion 7 and the linear scribing line 9 at a speed of 50 -1000 mm/s, more preferably 100 - 600 mm/s, most preferably 200 - 400 mm/s. By being able to adjust the speed of the movement of pulsations of the separation means 10, the contact member 36 which is attached to one end on the separation means 10, will exert the glass panel 3 along the linear scribing line 9, for separating the glass panels 3, in a controlled manner.

Additionally, heating means 31 are provided on the positioning portion 7, for heating a plastic laminate (not illustrated) in case the glass panel 3 is a laminated glass panel, wherein a plastic laminate is arranged in-between two glass panels. The heating means 31 used by the current device 1 should be taken from but not limited to an infrared lamp, a quartz emission lamp or an electric resistance, which provide sufficient heat as to warm up the plastic laminate, and which is finally cut away by the cutting blade 21 as to cut completely the plastic laminate, in a clean and easy manner. The cutting blade 21 can be moved in a vertical direction with respect to the supporting surface 2', and also along a direction which is substantially perpendicular to the displacement direction of the horizontal orientation of the glass panel 3. By having the cutting blade 21 being movable in such a manner, when contour cuts are performed to the glass panel 3, the cutting blade 21 can always cut the plastic laminate in the same fashion as the cutting heads 24 when the linear scribing line is done.

Figure 4 illustrates an example of the separating means 10 comprising a pair of pistons 32 connected in series, and mounted on a mounting element 34. The separation means 10 further comprises a sliding element 35 directly connected at the upper side of the mounting element 34. The sliding element 35 can be moved in a vertical direction with respect to the horizontal orientation of the glass panel 3, by moving the sliding element 35 with respect to a profile 33. The profile 33 is connected to the positioning portion 7 of the positioning bridge 6. At the lower end of the separating means 10, a contact member 36 having a contact surface 12 at its lower part, is provided. The contact surface 12 can be partially made of a thermoplastic material or a rubber-like material. Alternatively, contact member 36 can be made of two different materials, while the contact surface 12 is being made of the above mentioned materials.

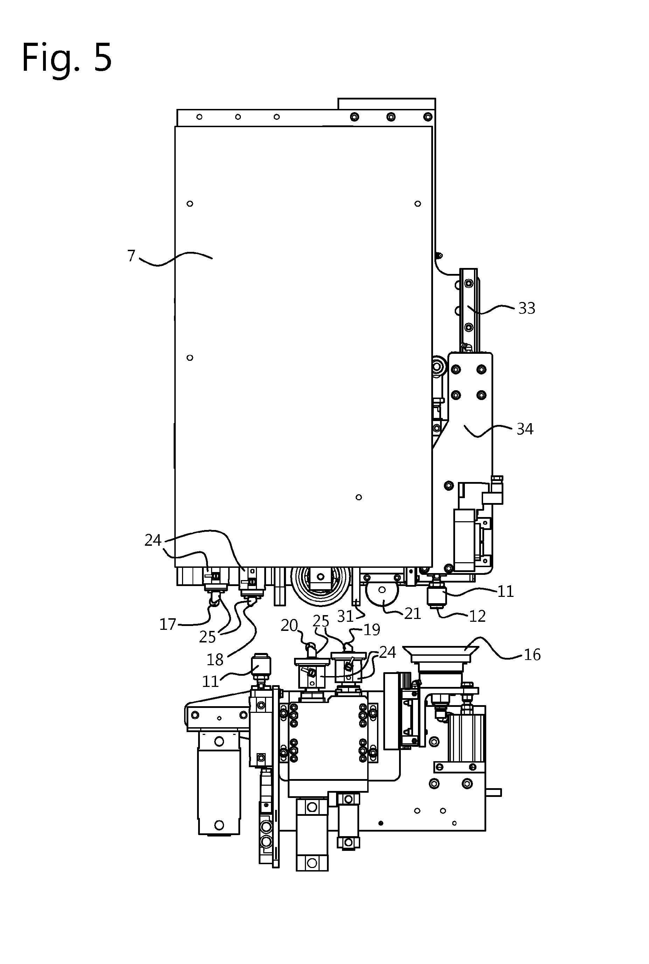

Figure 5 illustrates an example of the separating means 10 being connected to the positioning portion 7 of the positioning bridge 6, wherein the suction cup 16 is shown under the separation means 10 as embodied in figure 4.

The operation of the device according to the present invention will be explained here. During the operation of the cutting table 1, when a double glass panel 3 is to be cut, the glass panel 3 is positioned in a horizontal orientation. The laminated glass panel 3 is gripped by the clamping members 14, which clamp the glass panel from one of its edges 3', until the glass panel 3 is positioned at a location wherein at least part of the laminate glass panel 3 is positioned under the positioning bridge 6. Subsequently, the cutting wheels 25 are moved as to touch the upper and lower surfaces 4, 5 of the laminate glass panel 3. The cutting wheels 25 cut the upper and lower surfaces of the laminate glass panel 3 as to make a linear scribing line 9 along both surfaces. It should be noted that when the cut is performed, the cutting wheels 25 can be moved in a perpendicular direction with respect to the linear direction of the clamping members 14 while the clamping means 14 can move the laminate glass panel 3 in the horizontal direction with respect to the supporting means 2. In this manner, contour cuts can be achieved.

After the cutting, the laminate glass panel 3 is moved under the positioning bridge 6 by using the clamping members 14. By moving the laminated glass panel 3 as to position the separation means 10 over the linear scribing line 9, subsequent separation of the laminate glass panel 3 can be performed. Right after, by exerting controlled pressure on the upper and lower surfaces of the laminate glass panel 3, in a predetermined pulsating manner, along the linear scribing line 9, the laminated glass panel 3 can be separated in a clean manner, without the cutting edges of the laminate glass panel 3 being ruined or damaged by such a mechanical operation.

For subsequent cutting steps, the cut laminate glass panel 3 portions, must be moved away for releasing the cut parts. Subsequent cutting steps are performed by having the clamping members 14 and the suctions cups 16 cooperating together.

After the cut parts have been released, the heating lamp 31 heats up the plastic laminate 22 provided in between the laminated glass panel 3, and subsequently the cutting blade 21 performs a cut of the plastic laminate 22 as to provide the cut parts, and finalizing in this manner the cutting process.

The cut parts can be cut into smaller panels if required, by repeating the above-described process. In the present invention, both above and below cutting wheels 24 are arranged on the positioning bridge, and over the surface of the glass panel 3 being driven in a free rotation manner about their vertical axis, while the separating means 10 can be provided above or below, or above and below the upper and lower surfaces of the glass panel 3.

By using suction cups 16 adjustable according to the shape or size of the glass panel 3, independent of the separating means, the parted sheet can be gripped at a number of points selectable according to the characteristics of the glass panel to be moved.

Thus, the invention has been described by reference to the embodiments discussed above. It will be recognized that these embodiments are susceptible to various modifications and alternative forms well known to those of skill in the art without departing from the spirit and scope of the invention. Accordingly, although specific embodiments have been described, these are examples only and are not limiting upon the scope of the invention.

### Reference numerals

1. Device - cutting table
2. Supporting means
2'. Supporting means surface
3. Glass panel
3' Edge of the glass panel
4. Upper surface of the glass panel
5. Lower surface of the glass panel
6. Positioning bridge
7. Positioning portion
8. Cutting means
9. Linear scribing line
10. Separating means
11. Punching device
12. Contact surface of the separation means
13. Positioning means
14. Clamping members
15. Suction means/system
16. Suction cup/pad
17. First cutting member
18. Second cutting member
19. Third cutting member
20. Fourth cutting member
21. Cutting Blade
22. Plastic laminate
23. Opening for the clamping member
24. Cutting head
25. Cutting wheels
26. Driving motor
27. Mounting bracket
28. Cover element
29. Motor
30. Separation member
31. Heating means
32. Piston
33. Profile
34. Mounting element
35. Sliding element
36. Contact member

## Claims

1. Device for cutting and separating glass panels comprising:
supporting means (2) for supporting a glass panel (3) in a substantially horizontal orientation, the glass panel (3) having an upper and a lower surface (4, 5),
a positioning bridge (6) having a horizontally extending positioning portion (7) arranged at a vertical distance from the lower or upper surface (4, 5) of the glass panel (3) and the supporting means (2),
cutting means (8), arranged on the positioning portion (7), comprising a cutting member (17, 18, 19, 20) that is moveable along the positioning portion (7), and over the lower or upper surface (4, 5) of the glass panel (3), for cutting the respective surface in such a way as to obtain a linear scribing line (9), **characterised in that**
the positioning portion (7) is provided with separating means (10) for separating the glass panel (3) into two separate glass panels along the linear scribing line (9), the separating means (10) being configured for moving along the positioning portion (7) and along the linear scribing line (9) while exerting a controlled pressure on the glass panel (3) along the linear scribing line (9), wherein the exerted pressure varies in a pulsating manner.

2. Device according to claim 1, wherein the separating means (10) comprise an electric punching device, a pneumatic punching device or an electric-pneumatic punching device.

3. Device according to claim 1 or 2, wherein the separating means (10) comprise a contact surface (12) for exerting the pressure on the glass panel (3), the contact surface (12) being provided with a thermoplastic material or a rubber-like material.

4. Device according to any one of the claims 1-3, wherein the contacting surface (12) has a curved or flat surface.

5. Device according to any one of the claims 1-4, comprising positioning means (13) with clamping members (14) for clamping an edge (3') of the glass panel (3) and for moving the glass panel (3) in a horizontal direction to or from the position portion as to position the glass panel (3) relative to the cutting member (17, 18, 19, 20) and/or the separating means (10).

6. Device according to any one of the preceding claims, wherein the separation means (10) comprise a pressure exertion arrangement, comprising a cylinder and a piston (32) moveably arranged therein, extending in a direction perpendicular to the surface of the glass panel (3) upon which the pressure is to be exerted, the pressure exertion arrangement being configured for letting the piston (32) reciprocate at a frequency of 100 - 1000 Hz, more preferably 200 - 800 Hz, most preferably 600 Hz.

7. Device according to any one of the preceding claims, wherein the separation means (10) are configured for moving along the positioning portion (7) and the linear scribing line (9) at a speed of 50 -1000 mm/s, more preferably 100 - 600 mm/s, most preferably 200 - 400 mm/s.

8. Device according to any one of the preceding claims, wherein the exerted pressure is 0,05 - 1,5 MPa, more preferably 0,1 - 1,2 MPa, most preferably 0,3 - 1,0 MPa.

9. Device according to any one of the preceding claims, wherein the positioning bridge (6) comprises two horizontally extending positioning portions (7), an upper positioning portion during use to be arranged above the upper surface (4) of the glass panel and a lower positioning portion during use to be arranged below the lower surface (4) of the glass panel, wherein cutting means (8) and/or separating means (10) are arranged on both the upper and lower position portions to allow cutting and/or separation operations to be carried out on both the lower and upper surface (4, 5) of the glass panel (3).

10. Device according to any one of the preceding claims, wherein the positioning bridge (6) comprises a suction system (15) during use to be positioned below the lower surface (5) of the glass panel (3), such that after the glass panel (3) has been cut and separated into separated glass panels, the suction system (15) is configured to engage one of the separated glass panels for moving the one separated glass panel apart from the other separated glass panel.

11. Device according to claim 10, when dependent on claim 5, wherein the suction system (15) comprises a number of suction pads (16) configured to engage the one separated glass panel, wherein the clamping members (14) are configured to clamp the other separated glass panel, wherein the suction pads (16) cooperate with the clamping members (14) for moving the separated glass panels apart from each other.

12. Method for cutting and separating glass panels, comprising the steps of:
a) positioning a glass panel (3) on supporting means (2), for supporting a glass panel (3) in a substantially horizontal orientation, wherein the glass panel (3) has an upper and a lower surface (4, 5),
b) cutting or scribing the glass panel (3) along a linear scribing line (9) by means of cutting means (8), arranged on a horizontally extending positioning portion (7) of a positioning bridge (6), comprising a cutting member (17, 18, 19, 20) that is movable along the positioning portion (7), the positioning portion (7) being spaced-apart at a vertical distance from the lower or upper surface (4, 5) of the glass panel (3) and the supporting means (2), wherein the cutting or scribing is carried out by moving the cutting means (8) along the positioning portion (7),
c) separating the glass panel (3) into two separated glass panels along the linear scribing line (9) by means of moving separating means (10), configured to move along the positioning portion (7) and along the linear scribing line (7), along the positioning portion (7) while exerting a controlled pressure on the glass panel (3) along the linear scribing line (9), wherein the exerted pressure varies in a pulsating manner.

13. Method according to claim 12, wherein step a) comprises the step of positioning the glass panel (3) on the supporting means (2) by positioning means (13) with clamping members (14) for clamping an edge (3') of the glass panel (3) and moving the glass panel (3) in a horizontal direction to or from the positioning portion (7) as to position the glass panel (3) relative to the cutting member (17, 18, 19, 20) and the separation means (10).

14. Method according to claim 12 or 13, wherein the positioning bridge (6) comprises a suction system (15) during use to be positioned below the lower surface (4, 5) of the glass panel (3), wherein after step c) the suction system (15) engages one of the separated glass panels for allowing the other separated glass panel to be moved apart from the one separated glass panel.

15. Method according to any one of the claims 12-14, wherein, when the glass panel (3) is a laminated glass panel comprising a plastic laminate (22), step c) further comprises: e) heating up the plastic laminate (22) of the glass panel (3) by means of heating means (31) arranged at the positioning bridge (6), and
f) cutting the plastic laminate (22) of the glass panel (3) by means of a cutting blade (21) arranged on the positioning portion (7).
